# EUROPÄISCHE PATENTSCHRIFT

(11) **EP 2 929 220 B1**
(45) Veröffentlichungstag und Bekanntmachung des Hinweises auf die Patenterteilung: **01.08.2018**
(21) Anmeldenummer: 13785361.0
(22) Anmeldetag: 31.10.2013
(51) Int. Cl.: F16J 15/02, F16L 27/10

(54) **ELASTISCHES DICHTUNGSELEMENT FÜR EINEN FLUIDDURCHGANG, FLUIDFÜHRENDE VORRICHTUNG, DRUCKLUFTANLAGE UND KRAFTFAHRZEUG DAMIT SOWIE VERWENDUNG DES ELASTISCHEN DICHTUNGSELEMENTS**
ELASTIC SEAL ELEMENT FOR A FLUID PASSAGE, FLUID-CONDUCTING DEVICE, COMPRESSED AIR SYSTEM, MOTOR VEHICLE COMPRISING SAID ELASTIC SEAL ELEMENT, AND USE OF THE ELASTIC SEAL ELEMENT
ELÉMENT D'ÉTANCHÉITÉ ÉLASTIQUE POUR UN PASSAGE À FLUIDES, DISPOSITIF TRANSPORTANT DES FLUIDES, SYSTÈME D'AIR COMPRIMÉ, ET VÉHICULE À MOTEUR EN ÉTANT ÉQUIPÉ, AINSI QU'UTILISATION DE L'ÉLÉMENT D'ÉTANCHÉITÉ ÉLASTIQUE

(30) Priorität: 07.12.2012 DE 102012023972
(43) Veröffentlichungstag der Anmeldung: 14.10.2015
(73) Patentinhaber: WABCO GmbH, 30453 Hannover (DE)
(72) Erfinder: DIEKMEYER, Heinrich, 30890 Barsinghausen (DE); HANSEN, Yves, 30519 Hannover (DE); HEIN, Joachim, 30539 Hannover (DE); HILLBRING, Dirk, 29225 Celle (DE); KRAUS, Hauke, 30455 Hannover (DE)
(74) Vertreter: Lauerwald, Jörg
(86) Internationale Anmeldenummer: PCT/EP2013/003285
(87) Internationale Veröffentlichungsnummer: WO 2014/086451

(56) Entgegenhaltungen:
- DE-A1-102009 054 524
- US-A- 4 407 516
- US-A- 5 716 158

## Beschreibung

Die Erfindung betrifft ein elastisches Dichtungselement nach dem Oberbegriff von Anspruch 1. Das elastische Dichtungselement ist zum Abdichten eines Fluiddurchgangs gegen die Umgebung vorgesehen, wobei sich der Fluiddurchgang zwischen einem ersten Bauteil und einem zweiten Bauteil erstreckt und dabei durch das Dichtungselement hindurchgeführt ist. Das elastische Dichtungselement weist eine erste Dichtlinie auf, um das erste Bauteil rings um den Fluiddurchgang abdichtend zu kontaktieren. Diese erste Dichtlinie wird von einem ersten Wulst des elastischen Dichtungselements bereitgestellt. Das elastische Dichtungselement weist ferner eine zweite Dichtlinie auf, um das zweite Bauteil rings um den Fluiddurchgang abdichtend zu kontaktieren. Somit wird eine gegen die Umgebung abgedichtete Fluidverbindung zwischen dem ersten Bauteil und dem zweiten Bauteil mittels des elastischen Dichtungselements bereitgestellt. (US-A-4 407 516) Die Erfindung betrifft weiter eine fluidführende Vorrichtung, welche das erste Bauteil, das zweite Bauteil und das elastische Dichtungselement aufweist, gemäß dem Oberbegriff von Anspruch 6. Weiter betrifft die Erfindung eine Druckluftanlage für ein Kraftfahrzeug, wobei diese Druckluftanlage das erfindungsgemäße Dichtungselement bzw. die erfindungsgemäße fluidführende Vorrichtung aufweist. Ferner betrifft die Erfindung ein Kraftfahrzeug, welches das elastische Dichtungselement, die fluidführende Vorrichtung oder die Druckluftanlage aufweist. Schließlich betrifft die Erfindung die Verwendung des elastischen Dichtungselements zum Abdichten des Fluiddurchgangs zwischen dem ersten Bauteil und dem zweiten Bauteil.

Ein bekanntes elastisches Dichtungselement der eingangs genannten Art ist bspw. ein Dichtring bzw. ein sogenannter O-Ring. Mit einem O-Ring kann ein Fluiddurchgang, bspw. eine pneumatische oder hydraulische Verbindung, zwischen dem ersten Bauteil und dem zweiten Bauteil abgedichtet werden, indem axiale Dichtlinien des O-Rings gegen das erste Bauteil und das zweite Bauteil gepresst werden, so dass der O-Ring zwischen dem ersten Bauteil und dem zweiten Bauteil unter Ausübung axialer Kräfte eingeklemmt wird, die bei der Montage durch hohe Montagekräfte aufgebracht werden müssen. Die hohen Montagekräfte erschweren jedoch die Montage. Ferner können die axialen Kräfte Einflüsse auf das Messsignal einer Druckmesszelle haben, wenn diese Druckmesszelle als zweites Bauteil unter Einspannung des O-Rings am ersten Bauteil, bspw. einem Gehäuse, montiert ist. Diese Nachteile wirken sich entsprechend auf die fluidführende Vorrichtung, die Druckluftanlage und das Kraftfahrzeug sowie auf die Verwendung eines elastischen Dichtungselements zum Abdichten eines Fluiddurchgangs aus, wenn dieses elastische Dichtungselement ein gewöhnlicher O-Ring ist.

Der Erfindung liegt die Aufgabe zugrunde, das Abdichten eines Fluiddurchgangs zwischen einem ersten Bauteil und einem zweiten Bauteil zu verbessern.

Die Erfindung löst diese Aufgabe mit einem elastischen Dichtungselement nach Anspruch 1, mit einer fluidführenden Vorrichtung nach Anspruch 6, mit einer Druckluftanlage nach Anspruch 11, mit einem Kraftfahrzeug nach Anspruch 12 und mit der Verwendung eines elastischen Dichtungselements nach Anspruch 13.

Das elastische Dichtungselement weist eine schlauchartige Ausbildung auf, wobei der erste Wulst am ersten Ende des Dichtungselements angeordnet ist. Die zweite Dichtlinie wird von einem zweiten Wulst bereitgestellt, der am zweiten Ende des Dichtungselements angeordnet ist. Eine Schlauchhülle erstreckt sich vom ersten Wulst bis zum zweiten Wulst. Diese Schlauchhülle ermöglicht eine exzentrische Anordnung bzw. einen Querversatz des zweiten Wulstes relativ zum ersten Wulst, um den Fluiddurchgang auch bei exzentrischer bzw. querversetzter Ausrichtung des zweiten Bauteils relativ zum ersten Bauteil mittels des Dichtungselements abzudichten. Das in der Fluidverbindung geführte Fluid ist vorzugsweise Druckluft. Alternativ ist das Fluid bspw. ein Hydrauliköl oder eine andere Hydraulikflüssigkeit. Die Fluidverbindung kann somit eine pneumatische oder hydraulische Verbindung sein.

Mittels des erfindungsgemäßen elastischen Dichtungselements wird ein flexibler Ausgleich eines toleranzbedingten Versatzes des ersten Bauteils und des zweiten Bauteils bzw. von Löchern zum Fluiddurchgang in den Bauteilen relativ zueinander ermöglicht. Das erste Bauteil und das zweite Bauteil können mit größeren Fertigungstoleranzen und damit kostengünstiger gebaut und montiert werden. Ferner werden notwendige Montagekräfte reduziert. Die Montage wird dadurch insgesamt vereinfacht. Im Vergleich zu denkbaren Alternativlösungen reduziert sich mit dem elastischen Dichtungselement zudem der Materialaufwand.

Das elastische Dichtungselement kann somit flexibel bei querversetzter Ausrichtung des ersten Bauteils und des zweiten Bauteils relativ zueinander eingesetzt werden. Der Querversatz kann flexibel ausgeglichen werden. Durch einen Überdruck im Fluiddurchgang gegenüber der Umgebung kann sich das entsprechend montierte elastische Dichtungselement flexibel an Innenkonturen des ersten Bauteils und des zweiten Bauteils anlegen.

Gemäß einer besonders bevorzugten Aufführungsform ist die erste Dichtlinie als radiale Dichtlinie ausgebildet oder ist die zweite Dichtlinie als radiale Dichtlinie ausgebildet. Ganz besonders bevorzugt sind beide Dichtlinien als radiale Dichtlinien ausgebildet. Dadurch können die Montagekräfte und die auf das erste Bauteil und zweite Bauteil wirkenden Kräfte signifikant verringert werden.

Gemäß einer bevorzugten Ausführungsform ist der erste Wulst als radiale Dichtung zum ausschließlich radialen Abdichten ausgebildet. Die erste Dichtlinie ist dabei die einzige Dichtlinie des ersten Wulstes. Alternativ oder zusätzlich ist der zweite Wulst als radiale Dichtung zum ausschließlich radialen Abdichten ausgebildet. Dabei ist die zweite Dichtlinie die einzige Dichtlinie des zweiten Wulstes. Insbesondere sind somit nicht zugleich radiale und axiale Dichtlinien am ersten Wulst bzw. am zweiten Wulst vorgesehen. Dieser Ausführungsform liegt die Erkenntnis zugrunde, dass eine Ausbildung eines Wulstes als radiale Dichtung mit einfacher Dichtlinie gegenüber einem Wulst mit anders wirkender Dichtung bzw. mit mehreren Dichtlinien sowohl Vorteile in einer einfacheren Montage als auch in einer verbesserten Dichtheit hat.

Erfindungsgemäß weist der erste Wulst wenigstens eine erste axiale Nut auf, die zur Vermeidung einer axialen Dichtlinie den axialen Rand der ersten Wulst in radialer Richtung durchbricht. Alternativ oder zusätzlich weist bevorzugt der zweite Wulst wenigstens eine zweite axiale Nut auf, die zur Vermeidung einer axialen Dichtlinie den axialen Rand der zweiten Wulst in radialer Richtung durchbricht. Besonders bevorzugt weist der erste Wulst genau vier erste axiale Nuten auf und/oder weist der zweite Wulst genau vier zweite axiale Nuten auf. Die Erfindung hat erkannt, dass das elastische Dichtungselement zwar vorteilhaft zu montieren ist und nach der Montage einen vorteilhaften Sitz hat, wenn der axiale Rand des ersten Wulstes bzw. zweiten Wulstes das erste Bauteil bzw. zweite Bauteil kontaktiert. Weiter hat die Erfindung erkannt, dass axiale Dichtlinien aus den oben bereits genannten Gründen vorteilhafterweise zu vermeiden sind und diese axialen Dichtlinien mittels axialer Nuten, welche die axialen Ränder in radialer Richtung durchbrechen, in vorteilhafter Weise vermieden werden können. Insbesondere bilden sich aufgrund der axialen Nuten keine Luftkammern mit undefinierbaren Drücken zwischen dem ersten Wulst und dem ersten Bauteil bzw. zwischen dem zweiten Wulst und dem zweiten Bauteil, welche, insbesondere bei schwankenden Drücken im Fluiddurchgang, das Abdichten des Fluiddurchgangs an der ersten Dichtlinie bzw. zweiten Dichtlinie negativ beeinflussen könnten.

Gemäß einer besonders bevorzugten Ausführungsform ist der Umfang der Schlauchhülle in seinem mittleren Abschnitt zumindest bei Druckausgleich zwischen dem Fluiddurchgang und der Umgebung geringer als der Umfang des ersten Wulstes und/oder geringer als der Umfang des zweiten Wulstes. Insbesondere hat die Schlauchhülle einen einheitlichen Umfang und bildet somit eine gerade Verbindung der beiden Wulste, deren Dicke vorzugsweise größer ist als die Wanddicke der Schlauchhülle. Dabei sind die Wulste im Wesentlichen konvexe Ausbuchtungen, die zumindest an der Außenseite des elastischen Dichtungselements über konkav gekrümmte Abschnitte in die Schlauchhülle übergehen, zumindest wenn Druckausgleich besteht bzw. wenn das elastische Dichtungselement noch nicht den Fluiddurchgang zwischen dem ersten Bauteil und dem zweiten Bauteil mit einem Überdruck im Fluiddurchgang abdichtet. Die Dicke der Wulste ist vorzugsweise größer als die Wanddicke der Schlauchhülle. Der bei Druckausgleich gegenüber den Wulsten geringere Umfang der Schlauchhülle ermöglicht zum einen eine einfache Montage des elastischen Dichtungselements bzw. des ersten und des zweiten Bauteils relativ zueinander unter Abdichtung des Fluiddurchgangs mittels des elastischen Dichtungselements. Zum anderen wird ein evtl. Querversatz zwischen dem ersten Loch und dem zweiten Loch und somit zwischen dem ersten Wulst und dem zweiten Wulst mittels der Schlauchhülle effektiv ausgeglichen.

Gemäß einer vorteilhaften Ausführungsform ist der Umfang der Schlauchhülle zumindest in seinem mittleren Abschnitt durch Überdruck im Fluiddurchgang gegenüber der Umgebung vergrößerbar ausgebildet, um das Dichtungselement flexibel an das erste Bauteil und an das zweite Bauteil anzulegen. Durch einen geeignet großen Überdruck weitet sich jedoch die Schlauchhülle, insbesondere im mittleren Abschnitt, und legt sich somit an Konturen des ersten Bauteils und des zweiten Bauteils an. Die Schlauchhülle ist hierfür besonders flexibel ausgebildet. Alternativ oder zusätzlich ist hierfür die Wanddicke der Schlauchhülle geringer als die Dicke der Wulste ausgebildet. Dabei geht die konvexe Krümmung der Wulste vorzugsweise an der Innenseite des elastischen Dichtungselements über konkav gekrümmte Abschnitte in die Schlauchhülle über, wenn die Schlauchhülle aufgrund eines Überdrucks im Inneren des elastischen Dichtungselements geweitet ist.

Insbesondere werden bei der geweiteten Schlauchhülle Innenwände des ersten Lochs im ersten Bauteil und des zweiten Lochs im zweiten Bauteil mittels des ersten Wulstes bzw. mittels des zweiten Wulstes und mittels jeweils eines Teils der Schlauchhülle kontaktiert. Der lichte Innendurchmesser bzw. Querschnitt des elastischen Dichtungselements ist dabei ausreichend vergrößert, so dass eine effektive Druckvermittlung bzw. Durchleitung von Druckmittel wie Druckluft oder Hydraulikflüssigkeit zwischen dem ersten Bauteil und dem zweiten Bauteil auch bei einem Querversatz ermöglicht wird.

Vorteilhafterweise weist das elastische Dichtungselement ein Elastomer, insbesondere Silikon, auf. Besonders bevorzugt besteht das Dichtungselement im Wesentlichen aus dem Elastomer, insbesondere Silikon. Damit ist das Dichtungselement kostengünstig herstellbar und besonders gut zum Abdichten des Fluiddurchgangs geeignet.

Weiter muss vorteilhafterweise lediglich ein geringer Spalt zwischen dem ersten Bauteil und dem zweiten Bauteil überbrückt und abgedichtet werden. Das elastische Dichtungselement ragt vorteilhafterweise nicht viel weiter als nötig in die Löcher in den Bauteilen hinein. Daher ist vorteilhafterweise die Länge des elastischen Dichtungselements in axialer Richtung geringer als der Umfang des ersten Wulstes und/oder geringer als der Umfang des zweiten Wulstes.

Der mittels des elastischen Dichtungselements ermöglichte Querversatz zwischen den Wulsten bzw. zwischen den Löchern im ersten Bauteil und im zweiten Bauteil relativ zueinander beträgt vorteilhafterweise zwischen 0 und wenigstens 5 %, insbesondere zwischen 0 und wenigstens 10 %, vom Umfang des ersten Wulstes und/oder vom Umfang des zweiten Wulstes. Das elastischen Dichtungselement kann daher zum Abdichten des Fluiddurchgangs zwischen Bauteilen mit entsprechend großen Fertigungstoleranzen verwendet werden.

In der erfindungsgemäßen fluidführenden Vorrichtung mit dem ersten Bauteil und dem zweiten Bauteil ist das Dichtungselement zum Abdichten des Fluiddurchgangs auf die erfindungsgemäße Weise ausgebildet. Vorteilhafterweise ist das erste Bauteil dabei ein Gehäuse. Das zweite Bauteil ist vorteilhafterweise eine Messzelle, insbesondere ein Drucksensor. Somit kann eine Messzelle an einem Gehäuse befestigt werden und einen Druck messen, der über den Fluiddurchgang vom Gehäuse der Messzelle zugeführt wird. Dabei ist die Messzelle bspw. in dem Gehäuse selbst oder in einem Deckel des Gehäuses angeordnet und wird über den Deckel auf das Gehäuse gepresst bzw. am Gehäuse fixiert. Dank der erfindungsgemäßen Ausbildung des elastischen Dichtungselements muss der Deckel die Messzelle dabei nur mit vergleichsweise geringen Kräften gegen das Gehäuse drücken, so dass zum einen die Montage des Deckels am Gehäuse erleichtert wird und zum anderen die Gefahr einer Beeinflussung der Messung aufgrund nur geringer Kräfte, die auf die Messzelle wirken, minimiert wird.

Gemäß einer besonders bevorzugten Ausführungsform weist das erste Bauteil zumindest in dem vom Dichtungselement kontaktierten Bereich Kunststoff auf. Insbesondere besteht das erste Bauteil ganz oder im Wesentlichen aus Kunststoff. Alternativ weist das erste Bauteil Aluminium auf oder besteht ganz oder im Wesentlichen aus Aluminium.

Gemäß einer bevorzugten Ausführungsform weist alternativ oder zusätzlich das zweite Bauteil zumindest in dem vom Dichtungselement kontaktierten Bereich Keramik auf. Insbesondere besteht das zweite Bauteil zumindest in dem vom Dichtungselement kontaktierten Bereich ganz oder im Wesentlichen aus Keramik. Bspw. weist die Messzelle bzw. der Drucksensor einen Körper aus Keramik auf bzw. ist eine Keramikmesszelle.

In alternativen Ausführungsformen der Erfindung bestehen das erste Bauteil und/oder das zweite Bauteil aus anderen Materialien oder weisen andere Materialien, insbesondere in dem jeweiligen vom Dichtungselement kontaktierten Bereich, auf. Beispiele für derartige andere Materialien sind weitere Metalle sowie Materialien, die unempfindlich gegenüber Temperaturen bzw. Temperaturschwankungen im Einsatzbereich der fluidführenden Vorrichtung sind.

Gemäß einer besonderen Ausführungsform ermöglicht die Erfindung nicht nur die Verwendung von Bauteilen mit höheren Fertigungstoleranzen, sondern setzt tatsächlich Bauteile mit entsprechenden Fertigungstoleranzen ein. Das zweite Bauteil ist somit mit einem Querversatz relativ zum ersten Bauteil bezogen auf Kontaktflächen des ersten Bauteils und des zweiten Bauteils zum Dichtungselement angeordnet. Insbesondere ist das o. g. zweite Loch versetzt relativ zum ersten Loch angeordnet, wenn das erste Bauteil und das zweite Bauteil mit dem elastischen Dichtungselement zur Bildung der fluidführenden Vorrichtung angeordnet sind.

Gemäß einer besonders bevorzugten Ausführungsform ist das zweite Bauteil relativ zum ersten Bauteil fixiert. Insbesondere findet bspw. keine Rotation des zweiten Bauteils relativ zum ersten Bauteil statt. Das erste Bauteil und/oder das zweite Bauteil müssen somit nicht am elastischen Dichtungselement reiben, was sich positiv auf den Erhalt der Dichtungseigenschaften auswirkt.

Die erfindungsgemäße Druckluftanlage ist für ein Kraftfahrzeug vorgesehen und weist das erfindungsgemäße elastische Dichtungselement oder die erfindungsgemäße fluidführende Vorrichtung mit dem elastischen Dichtungselement auf. Die Druckluftanlage ist bspw. eine pneumatische Bremsanlage des Kraftfahrzeugs, wobei die fluidführende Vorrichtung bspw. ein Bremsmodulator mit einem Gehäuse ist, in dem Ventile angeordnet sind. Mittels der Messzelle wird bspw. ein Eingangsdruck oder ein ausgesteuerter pneumatischer Druck gemessen. Alternativ oder zusätzlich kann die Druckluftanlage eine Luftfederung umfassen, wobei die fluidführende Vorrichtung bzw. das elastische Dichtungselement Teil dieser Luftfederung sein kann.

Das erfindungsgemäße Kraftfahrzeug ist insbesondere ein Nutzfahrzeug, bspw. ein Lastkraftwagen bzw. ein Bus. Das Kraftfahrzeug weist das erfindungsgemäße elastische Dichtungselement oder die erfindungsgemäße fluidführende Vorrichtung oder die erfindungsgemäße Druckluftanlage auf. Ansonsten kann das Kraftfahrzeug in bekannter Weise ausgebildet sein, bspw. von einem Motor, insbesondere Verbrennungsmotor, angetrieben sein und Räder und ggf. eine Ladefläche aufweisen.

Die erfindungsgemäße Verwendung eines elastischen Dichtungselements zum Abdichten eines Fluiddurchgangs zwischen einem ersten Bauteil und einem zweiten Bauteil zeichnet sich dadurch aus, dass das verwendete Dichtungselement auf die erfindungsgemäße Weise ausgebildet ist oder in entsprechender Ausbildung zum Abdichten in einer erfindungsgemäßen fluidführenden Vorrichtung und/oder in einer erfindungsgemäßen Druckluftanlage und/oder in einem erfindungsgemäßen Fahrzeug verwendet wird.

Gemäß einer besonders bevorzugten Verwendung des elastischen Dichtungselements werden das elastische Dichtungselement und das zweite Bauteil derart am ersten Bauteil angeordnet, dass nachfolgend der Fluiddurchgang zwischen dem ersten Bauteil und dem zweiten Bauteil durch das Dichtungselement hindurchgeführt ist, wobei das Dichtungselement das zweite Bauteil exzentrisch bzw. querversetzt relativ zum ersten Bauteil abdichtend derart kontaktiert, dass die vom ersten Wulst des Dichtungselements bereitgestellte erste Dichtlinie des Dichtungselements rings um den Fluiddurchgang mit dem ersten Bauteil abdichtend kontaktiert wird und die vom zweiten Wulst des Dichtungselements bereitgestellte zweite Dichtlinie des Dichtungselements rings um den Fluiddurchgang mit dem zweiten Bauteil abdichtend kontaktiert wird. Dabei wird das Dichtungselement vorzugsweise mit einem Querversatz des zweiten Wulstes relativ zum ersten Wulst angeordnet, wobei die Querversatz mittels der Schlauchhülle des schlauchartig ausgebildeten Dichtungselements ermöglicht wird, die sich vom am ersten Ende des Dichtungselements angeordneten ersten Wulst bis zum am zweiten Ende des Dichtungselements angeordneten zweiten Wulst erstreckt. Somit wird das Dichtungselement zum Abdichten bei flexiblem Toleranzausgleich verwendet.

Weitere Ausführungsformen ergeben sich aus den Ansprüchen sowie aus dem anhand der Zeichnung näher erläuterten Ausführungsbeispiel. In der Zeichnung zeigen:
- Fig. 1: ein elastisches Dichtungselement gemäß einem Ausführungsbeispiel der Erfindung in einer Seitenansicht;
- Fig. 2: das elastische Dichtungselement des Ausführungsbeispiels gemäß Fig. 1 in einer Draufsicht rings um einen Fluiddurchgang und
- Fig. 3: eine fluidführende Vorrichtung mit dem elastischen Dichtungselement des Ausführungsbeispiels gemäß den Fig. 1 und 2 in einer Schnittdarstellung von der Seite.

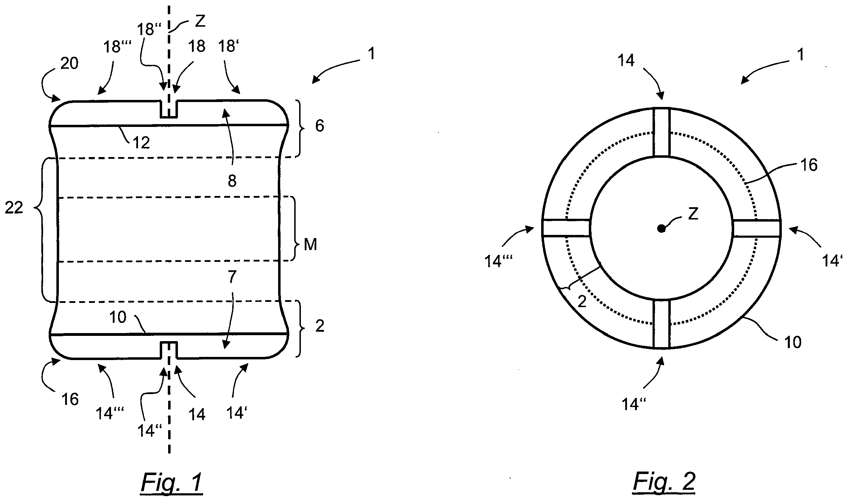

Fig. 1 und Fig. 2 zeigen ein elastisches Dichtungselement 1 gemäß einem Ausführungsbeispiel der Erfindung, wobei Fig. 1 das Dichtungselement 1 in einer Seitenansicht und Fig. 2 in einer Draufsicht zeigt. Das elastische Dichtungselement 1 ist eine schlauchartige Dichtung mit Wulsten 2 und 6. Das elastische Dichtungselement 1 ist symmetrisch in Bezug auf Drehungen um 90 Grad, um 180 Grad und um 270 Grad um eine Achse Z ausgebildet. Zwischen den Wulsten 2, 6 sowie in einer vom Ausführungsbeispiel gemäß Fig. 1 abweichenden Ausführungsform ohne Nuten auch an den Wulsten 2, 6 ist das elastische Dichtungselement 1 sogar rotationssymmetrisch um die Achse Z ausgebildet.

Das elastische Dichtungselement 1 weist den ersten Wulst 2 an seinem ersten Ende 7 und den zweiten Wulst 6 an seinem zweiten Ende 8 auf. Der erste Wulst 2 und der zweite Wulst 6 sind jeweils als radiale Dichtung zum ausschließlich radialen Abdichten ausgebildet. Hierzu weist der erste Wulst 2 eine als radiale Dichtlinie ausgebildete erste Dichtlinie 10 und der zweite Wulst 6 eine als radiale Dichtlinie ausgebildete zweite Dichtlinie 12 auf. Die erste Dichtlinie 10 ist die einzige Dichtlinie des ersten Wulstes 2. Zur Vermeidung einer axialen Dichtlinie weist der erste Wulst 2 vier erste axiale Nuten 14, 14', 14", 14'" auf, welche den axialen Rand 16 des ersten Wulstes 2 in radialer Richtung, d.h. senkrecht zur Achse Z, durchbrechen. Entsprechend weist der zweite Wulst 6 vier zweite axiale Nuten 18, 18', 18"; 18'" auf, die den axialen Rand 20 des zweiten Wulstes 6 in radialer Richtung durchbrechen.

Zwischen dem ersten Wulst 2 und dem zweiten Wulst 6 ist das elastische Dichtungselement 1 als Schlauchhülle 22 ausgebildet, die zumindest in einem mittleren Abschnitt M einen geringeren Umfang als der erste Wulst 2 und als der zweite Wulst 6 aufweist. Das elastische Dichtungselement 1 mit dem ersten Wulst 2, dem zweiten Wulst 6 und der Schlauchhülle 22 ist dabei einteilig ausgebildet und besteht im Wesentlichen aus Silikon oder einem anderen Elastomer.

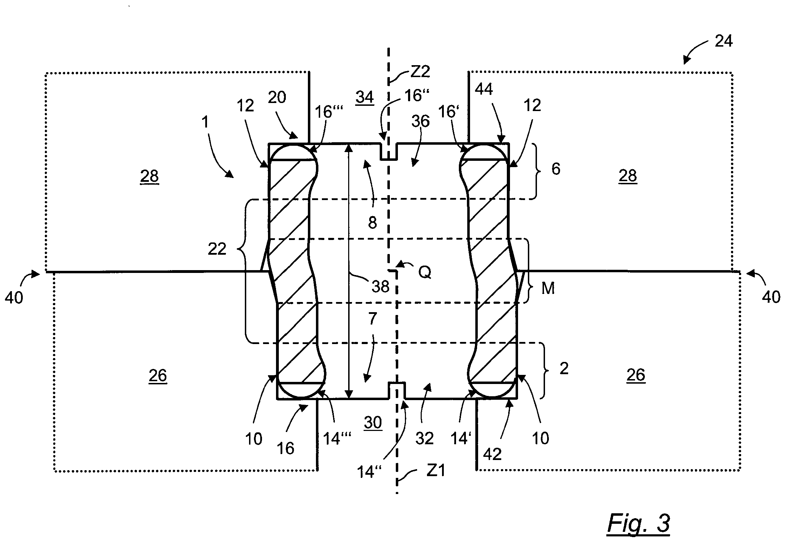

Fig. 3 zeigt einen Ausschnitt einer fluidführenden Vorrichtung 24 gemäß einem Ausführungsbeispiel der Erfindung in einer Schnittdarstellung von der Seite. Die fluidführende Vorrichtung 24 weist ein nur teilweise dargestelltes erstes Bauteil 26, bspw. ein Kunststoffgehäuse oder ein Aluminiumgehäuse, auf. Weiter weist die fluidführende Vorrichtung 24 ein ebenfalls nur teilweise dargestelltes zweites Bauteil 28, bspw. eine Keramikmesszelle, sowie das elastische Dichtungselement 1 des Ausführungsbeispiels gemäß den Fig. 1 und 2 auf. Ein erster Druckkanal 30 im ersten Bauteil 26 ist zum Rand des ersten Bauteils 26 hin zu einem Loch 32 verbreitert. Ein zweiter Druckkanal 34 im zweiten Bauteil 28 ist zum Rand des zweiten Bauteils 28 hin zu einem zweiten Loch 36 verbreitert. Ein Fluiddurchgang 38 vom ersten Bauteil 26 zum zweiten Bauteil 28 erstreckt sich im Bereich bzw. innerhalb der Löcher 32 und 36 unter Querung eines evtl. Fluidspalts 40 zwischen dem ersten Bauteil 26 und dem zweiten Bauteil 28.

Der Fluiddurchggang 38 führt durch das elastische Dichtungselement 1 hindurch und wird mittels des elastischen Dichtungselements 1 gegen die Umgebung abgedichtet. Insbesondere verhindert das elastische Dichtungselement 1 ein Ausströmen von Druckluft aus dem ersten Druckkanal 30 und aus dem zweiten Druckkanal 34 bzw. aus dem Fluiddurchgang 38 durch den Fluidspalt 40 zur Umgebung. Mittels der ersten Dichtlinie 10 wird das erste Bauteil 26 rings um den Fluiddurchgang 38 abdichtend kontaktiert. Mittels der zweiten Dichtlinie 12 wird das zweite Bauteil 28 rings um den Fluiddurchgang 38 abdichtend kontaktiert. Die Nuten 14, 14', 14" und 14'" bzw. 18, 18', 18" und 18'" ermöglichen einen Fluidaustausch bzw. Luftaustausch zwischen dem Fluiddurchgang 38 und Kammern 42 und 44, so dass axiale Dichtlinien vermieden und die radialen Dichtlinien 10 und 12 somit in ihrer Funktion unterstützt bzw. nicht beeinträchtigt werden.

Die Schlauchhülle 22 ist in der Darstellung gemäß Fig. 3 insbesondere in ihrem mittlerem Abschnitt M, aufgrund eines Überdrucks im Fluiddurchgang 38 gegenüber der Umgebung geweitet, so dass sich die Schlauchhülle 22 an Innenkonturen des ersten Bauteils 26 und des zweiten Bauteils 28, insbesondere an Innenkonturen der Löcher 32 und 36, anschmiegt. Dies gelingt aufgrund der flexiblen Ausgestaltung des elastischen Dichtungselements 1 bzw. der Schlauchhülle 22 trotz eines Querversatzes Q zwischen dem ersten Bauteil 26 und dem zweiten Bauteil 28 bzw. zwischen dem ersten Wulst 2 und dem zweiten Wulst 6 bzw. zwischen dem ersten Loch 32 und dem zweiten Loch 36. Statt der durchgehenden Achse Z weist das elastische Dichtungselement 1 nun zwei um den Querversatz Q gegeneinander versetzte Achsen Z1 und Z2 auf. Insbesondere im mittleren Abschnitt M ist aufgrund der Konturanpassung die Rotationssymmetrie gemäß Fig. 1 zumindest nicht mehr durchgängig gegeben.

Insgesamt ermöglicht die Erfindung eine flexible Montage bei Fertigungstoleranzen aufweisenden bzw. versetzt zueinander ausgerichteten Bauteilen 26, 28. Das elastische Dichtungselement 1 kann flexibel Toleranzen nicht exakt zueinander ausgerichteter Bauteile 26, 28 bzw. Löcher 32, 36 ausgleichen, wobei sich das elastische Dichtungselement 1, insbesondere im Bereich der Schlauchhülle 22, flexibel an die Innenkontur der Bauteile 26 und 28, insbesondere im Bereich der Löcher 32 und 36, anlegt.

Somit ermöglicht die Erfindung eine einfache Montage mit dem kostengünstig herzustellenden elastischen Dichtungselement 1 und somit eine Reduzierung von Teilekosten und Montagekosten.

Alle in der vorstehenden Beschreibung und in den Ansprüchen genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

### Bezugszeichenliste

- 1: Elastisches Dichtungselement
- 2: erster Wulst
- 6: zweiter Wulst
- 7: erstes Ende
- 8: zweites Ende
- 10: erste Dichtlinie
- 12: zweite Dichtlinie
- 14,14',14";14"': erste axiale Nut
- 16: axialer Rand des ersten Wulstes
- 18,18',18";18'": zweite axiale Nut
- 20: axialer Rand des zweiten Wulstes
- 22: Schlauchhülle
- 24: fluidführende Vorrichtung
- 26: erstes Bauteil
- 28: zweites Bauteil
- 30: erster Druckkanal
- 32: erstes Loch
- 34: zweiter Druckkanal
- 36: zweites Loch
- 38: Fluiddurchgang
- 40: Fluidspalt
- 42: Fluidkammer (erste)
- 44: Fluidkammer (zweite)
- Z: Achse
- M: mittlerer Abschnitt der Schlauchhülle
- Q: Querversatz

## Patentansprüche

1. Elastisches Dichtungselement (1) zum Abdichten eines durch das Dichtungselement (1) hindurchgeführten Fluiddurchgangs (38) zwischen einem ersten Bauteil (26) und einem zweiten Bauteil (28) gegen die Umgebung mit einer ersten Dichtlinie (10), um das erste Bauteil (26) rings um den Fluiddurchgang (38) abdichtend zu kontaktieren, mit einem ersten Wulst (2), der die erste Dichtlinie (10) bereitstellt, und mit einer zweiten Dichtlinie (12), um das zweite Bauteil (28) rings um den Fluiddurchgang (38) abdichtend zu kontaktieren,
wobei
eine schlauchartige Ausbildung des elastischen Dichtungselements (1) mit dem ersten Wulst (2) an seinem ersten Ende (7), mit einem zweiten Wulst (6), der die zweite Dichtlinie (12) bereitstellt, an seinem zweiten Ende (8) und mit einer sich vom ersten Wulst (2) bis zum zweiten Wulst (6) erstreckenden Schlauchhülle (22), die einen Querversatz (Q) des zweiten Wulstes (6) relativ zum ersten Wulst (2) ermöglicht, um den Fluiddurchgang (38) auch bei querversetzter Ausrichtung des zweiten Bauteils (28) relativ zum ersten Bauteil (26) mittels des elastischen Dichtungselements (1) abzudichten, **dadurch gekennzeichnet, dass**
der erste Wulst (2) wenigstens eine erste axiale Nut (14, 14', 14", 14"'), vorzugsweise mehrere erste axiale Nuten, insbesondere vier erste axiale Nuten, aufweist, die zur Vermeidung einer axialen Dichtlinie den axialen Rand (16) der ersten Wulst (2) in radialer Richtung durchbricht und/oder der zweite Wulst (6) wenigstens eine zweite axiale Nut (18, 18', 18", 18"'), vorzugsweise mehrere zweite axiale Nuten, insbesondere vier zweite axiale Nuten, aufweist, die zur Vermeidung einer axialen Dichtlinie den axialen Rand (20) der zweiten Wulst (6) in radialer Richtung durchbricht.

2. Elastisches Dichtungselement nach Anspruch 1,
**dadurch gekennzeichnet, dass**
die erste Dichtlinie (10) als radiale Dichtlinie ausgebildet ist und/oder die zweite Dichtlinie (12) als radiale Dichtlinie ausgebildet ist.

3. Elastisches Dichtungselement nach Anspruch 2,
**dadurch gekennzeichnet, dass**
der erste Wulst (2) als radiale Dichtung zum ausschließlich radialen Abdichten ausgebildet ist, wobei die erste Dichtlinie (10) die einzige Dichtlinie des ersten Wulstes (2) ist, und/oder der zweite Wulst (6) als radiale Dichtung zum ausschließlich radialen Abdichten ausgebildet ist, wobei die zweite Dichtlinie (12) die einzige Dichtlinie des zweiten Wulstes (6) ist.

4. Elastisches Dichtungselement nach einem der vorherigen Ansprüche,
**dadurch gekennzeichnet, dass**
der Umfang der Schlauchhülle (22) zumindest in einem mittleren Abschnitt (11) bei Druckausgleich zwischen dem Fluiddurchgang (38) und der Umgebung geringer ist als der Umfang des ersten Wulstes (2) und/oder geringer ist als der Umfang des zweiten Wulstes (6).

5. Elastisches Dichtungselement nach einem der vorherigen Ansprüche,
**dadurch gekennzeichnet, dass**
der Umfang der Schlauchhülle (22) zumindest in einem mittleren Abschnitt (11) durch Überdruck im Fluiddurchgang (38) gegenüber der Umgebung vergrößerbar ausgebildet ist, um das elastische Dichtungselement (1) flexibel an das erste Bauteil (26) und an das zweite Bauteil (28) anzulegen.

6. Fluidführende Vorrichtung mit einem ersten Bauteil (26), einem zweiten Bauteil (28) und einem elastischen Dichtungselement (1), das einen durch das elastische Dichtungselement (1) hindurchgeführten Fluiddurchgang (38) zwischen dem ersten Bauteil (26) und dem zweiten Bauteil (28) abdichtet, wobei das elastische Dichtungselement (1) eine erste Dichtlinie (10) aufweist, mit der das erste Bauteil (26) rings um den Fluiddurchgang (38) abdichtend kontaktiert ist, einen ersten Wulst (2) aufweist, der die erste Dichtlinie (10) bereitstellt, und eine zweite Dichtlinie (12) aufweist, mit der das zweite Bauteil (28) rings um den Fluiddurchgang (38) abdichtend kontaktiert ist,
**gekennzeichnet durch**
eine Ausbildung des Dichtungselements (1) nach einem der Ansprüche 1 bis 5.

7. Fluidführende Vorrichtung nach Anspruch 6,
**dadurch gekennzeichnet, dass**
das erste Bauteil (26) ein Gehäuse und das zweite Bauteil (28) eine Messzelle, insbesondere ein Drucksensor, ist.

8. Fluidführende Vorrichtung nach Anspruch 6 oder 7,
**dadurch gekennzeichnet, dass**
das erste Bauteil (26) zumindest in dem vom elastischen Dichtungselement (1) kontaktierten Bereich Kunststoff oder Aluminium aufweist, insbesondere ganz oder zumindest im Wesentlichen aus Kunststoff oder Aluminium besteht, und/oder das zweite Bauteil (28) zumindest in dem vom elastischen Dichtungselement (1) kontaktierten Bereich Keramik aufweist, insbesondere ganz oder zumindest im Wesentlichen aus Keramik besteht.

9. Fluidführende Vorrichtung nach einem der Ansprüche 6 bis 8,
**dadurch gekennzeichnet, dass**
das zweite Bauteil (28) mit einem Querversatz (Q) relativ zum ersten Bauteil (26) bezogen auf Kontaktflächen des ersten Bauteils (26) und des zweiten Bauteils (28) zum elastischen Dichtungselement (1) angeordnet ist.

10. Fluidführende Vorrichtung nach einem der Ansprüche 6 bis 9,
**dadurch gekennzeichnet, dass**
das zweite Bauteil (28) relativ zum ersten Bauteil (26) fixiert ist.

11. Druckluftanlage für ein Kraftfahrzeug mit einem elastischen Dichtungselement (1) nach einem der Ansprüche 1 bis 5 oder mit einer fluidführenden Vorrichtung (24) nach einem der Ansprüche 6 bis 10.

12. Kraftfahrzeug, insbesondere Nutzfahrzeug, mit einem elastischen Dichtungselement (1) nach einem der Ansprüche 1 bis 5 oder mit einer fluidführenden Vorrichtung (24) nach einem der Ansprüche 6 bis 10 oder mit einer Druckluftanlage nach Anspruch 11.

13. Verwendung eines elastischen Dichtungselements (1) zum Abdichten eines Fluiddurchgangs (38) zwischen einem ersten Bauteil (26) und einem zweiten Bauteil (28),
**dadurch gekennzeichnet, dass**
das verwendete elastische Dichtungselement (1) nach einem der Ansprüche 1 bis 5 ausgebildet ist oder das elastische Dichtungselement (1) in einer Ausbildung nach einem der Ansprüche 1 bis 5 zum Abdichten in einer fluidführenden Vorrichtung (24) nach einem der Ansprüche 6 bis 10 und/oder in einer Druckluftanlage nach Anspruch 11 und/oder in einem Kraftfahrzeug nach Anspruch 12 verwendet wird.

14. Verwendung eines elastischen Dichtungselements nach Anspruch 13,
**dadurch gekennzeichnet, dass**
das elastische Dichtungselement (1) und das zweite Bauteil (28) derart am ersten Bauteil (26) angeordnet werden, dass nachfolgend der Fluiddurchgang (38) zwischen dem ersten Bauteil (26) und dem zweiten Bauteil (28) durch das elastische Dichtungselement (1) hindurchgeführt ist, wobei das elastische Dichtungselement (1) das zweite Bauteil (28) querversetzt relativ zum ersten Bauteil (26) abdichtend derart kontaktiert, dass die vom ersten Wulst (2) des elastischen Dichtungselements (1) bereitgestellte erste Dichtlinie (10) des elastischen Dichtungselements (1) rings um den Fluiddurchgang (38) mit dem ersten Bauteil (26) abdichtend kontaktiert wird und die vom zweiten Wulst (6) des elastischen Dichtungselements (1) bereitgestellte zweite Dichtlinie (12) des elastischen Dichtungselements (1) rings um den Fluiddurchgang (38) mit dem zweiten Bauteil (28) abdichtend kontaktiert wird, wobei das elastische Dichtungselement (1) mit einem Querversatz (Q) des zweiten Wulstes (6) relativ zum ersten Wulst (2) angeordnet wird und wobei dieser Querversatz (Q) mittels der Schlauchhülle (22) des schlauchartig ausgebildeten elastischen Dichtungselements (1) ermöglicht wird, die sich vom am ersten Ende (7) des elastischen Dichtungselements (1) angeordneten ersten Wulst (2) bis zum am zweiten Ende (8) des elastischen Dichtungselements (1) angeordneten zweiten Wulst (6) erstreckt.

## Claims

1. Elastic seal element (1) for sealing off a fluid passage (38), passing through the seal element (1), between a first component (26) and a second component (28) from the surroundings, having a first sealing line (10), in order to make sealing contact with the first component (26) all around the fluid passage (38), having a first bead (2), which provides the first sealing line (10), and having a second sealing line (12), in order to make sealing contact with the second component (28) all around the fluid passage (38),
wherein
a tubular configuration of the elastic seal element (1) with the first bead (2) at its first end (7), with a second bead (6), which provides the second sealing line (12), at its second end (8), and with a tubular sheath (22) extending from the first bead (2) to the second bead (6), said tubular sheath (22) allowing a transverse offset (Q) of the second bead (6) relative to the first bead (2) in order to seal off the fluid passage (38) by means of the elastic seal element (1) even when the second component (28) is in a transversely offset orientation relative to the first component (26),
**characterized in that**
the first bead (2) has at least one first axial groove (14, 14', 14", 14'"), preferably a plurality of first axial grooves, in particular four first axial grooves, which, in order to avoid an axial sealing line, breaks through the axial rim (16) of the first bead (2) in the radial direction, and/or the second bead (6) has at least one second axial groove (18, 18', 18", 18'"), preferably a plurality of second axial grooves, in particular four second axial grooves, which, in order to avoid an axial sealing line, breaks through the axial rim (20) of the second bead (6) in the radial direction.

2. Elastic seal element according to Claim 1,
**characterized in that**
the first sealing line (10) is configured as a radial sealing line and/or the second sealing line (12) is configured as a radial sealing line.

3. Elastic seal element according to Claim 2,
**characterized in that**
the first bead (2) is configured as a radial seal for exclusively radial sealing, wherein the first sealing line (10) is the only sealing line of the first bead (2), and/or the second bead (6) is configured as a radial seal for exclusively radial sealing, wherein the second sealing line (12) is the only sealing line of the second bead (6).

4. Elastic seal element according to one of the preceding claims,
**characterized in that**
the circumference of the tubular sheath (22) is less than the circumference of the first bead (2) and/or less than the circumference of the second bead (6) at least in a central portion (11) in the case of pressure equalization between the fluid passage (38) and the surroundings.

5. Elastic seal element according to one of the preceding claims,
**characterized in that**
the circumference of the tubular sheath (22) is configured to be enlargeable with respect to the surroundings, at least in a central portion (11), by positive pressure in the fluid passage (38), in order to apply the elastic seal element (1) flexibly to the first component (26) and to the second component (28).

6. Fluid-conducting device having a first component (26), a second component (28) and an elastic seal element (1) which seals off a fluid passage (38), passing through the elastic seal element (1), between the first component (26) and the second component (28), wherein the elastic seal element (1) has a first sealing line (10), by way of which sealing contact is made with the first component (26) all around the fluid passage (38), has a first bead (2), which provides the first sealing line (10), and has a second sealing line (12), by way of which sealing contact is made with the second component (28) all around the fluid passage (38), **characterized by**
a configuration of the seal element (1) according to one of Claims 1 to 5.

7. Fluid-conducting device according to Claim 6,
**characterized in that**
the first component (26) is a housing and the second component (28) is a measuring cell, in particular a pressure sensor.

8. Fluid-conducting device according to Claim 6 or 7,
**characterized in that**
the first component (26) exhibits plastics material or aluminum, at least in the region with which the elastic seal element (1) makes contact, and in particular consists entirely or at least substantially of plastics material or aluminum, and/or the second component (28) exhibits ceramic, at least in the region with which the elastic seal element (1) makes contact, and in particular consists entirely or at least substantially of ceramic.

9. Fluid-conducting device according to one of Claims 6 to 8,
**characterized in that**
the second component (28) is arranged with a transverse offset (Q) relative to the first component (26) with respect to contact faces of the first component (26) and of the second component (28) with the elastic seal element (1).

10. Fluid-conducting device according to one of Claims 6 to 9,
**characterized in that**
the second component (28) is fixed relative to the first component (26).

11. Compressed air system for a motor vehicle, having an elastic seal element (1) according to one of Claims 1 to 5 or having a fluid-conducting device (24) according to one of Claims 6 to 10.

12. Motor vehicle, in particular commercial vehicle, having an elastic seal element (1) according to one of Claims 1 to 5 or having a fluid-conducting device (24) according to one of Claims 6 to 10 or having a compressed air system according to Claim 11.

13. Use of an elastic seal element (1) for sealing off a fluid passage (38) between a first component (26) and a second component (28),
**characterized in that**
the elastic seal element (1) that is used is configured according to one of Claims 1 to 5, or the elastic seal element (1) is used in a configuration according to one of Claims 1 to 5 for sealing off in a fluid-conducting device (24) according to one of Claims 6 to 10 and/or in a compressed air system according to Claim 11 and/or in a motor vehicle according to Claim 12.

14. Use of an elastic seal element according to Claim 13,
**characterized in that**
the elastic seal element (1) and the second component (28) are arranged at the first component (26) such that subsequently the fluid passage (38) passes through the elastic seal element (1) between the first component (26) and the second component (28), wherein the elastic seal element (1) makes sealing contact with the second component (28) in a manner transversely offset relative to the first component (26) such that the first sealing line (10) of the elastic seal element (1), said first sealing line (10) being provided by the first bead (2) of the elastic seal element (1), is brought into sealing contact with the first component (26) all around the fluid passage (38) and the second sealing line (12) of the elastic seal element (1), said second sealing line (12) being provided by the second bead (6) of the elastic seal element (1), is brought into sealing contact with the second component (28) all around the fluid passage (38), wherein the elastic seal element (1) is arranged with a transverse offset (Q) of the second bead (6) relative to the first bead (2) and wherein this transverse offset (Q) is enabled by means of the tubular sheath (22) of the elastic seal element (1) configured in a tubular manner, said tubular sheath (22) extending from the first bead (2), arranged at the first end (7) of the elastic seal element (1), to the second bead (6), arranged at the second end (8) of the elastic seal element (1).

## Revendications

1. Élément d'étanchéité élastique (1) pour réaliser l'étanchéité vis-à-vis de l'environnement d'un passage de fluide (38) guidé à travers l'élément d'étanchéité (1) entre un premier composant (26) et un deuxième composant (28), comprenant une première ligne d'étanchéité (10) destinée à venir en contact de manière hermétique avec le premier composant (26) tout autour du passage de fluide (38), avec un premier bourrelet (2) qui constitue la première ligne d'étanchéité (10), et avec une deuxième ligne d'étanchéité (12) destinée à venir en contact de manière hermétique avec le deuxième composant (28) tout autour du passage de fluide (38),
une réalisation en forme de tuyau souple de l'élément d'étanchéité élastique (1) avec le premier bourrelet (2) à sa première extrémité (7), avec le deuxième bourrelet (6), qui constitue la deuxième ligne d'étanchéité (12), à sa deuxième extrémité (8), et avec une enveloppe de tuyau souple (22) s'étendant depuis le premier bourrelet (2) jusqu'au deuxième bourrelet (6), qui permet un décalage transversal (Q) du deuxième bourrelet (6) par rapport au premier bourrelet (2), afin d'étanchéifier le passage de fluide (38) également lors d'une orientation décalée transversalement du deuxième composant (28) par rapport au premier composant (26) au moyen de l'élément d'étanchéité élastique (1), **caractérisé en ce que** le premier bourrelet (2) présente au moins une première rainure axiale (14, 14', 14'', 14'''), de préférence plusieurs premières rainures axiales, en particulier quatre premières rainures axiales, qui, pour éviter une ligne d'étanchéité axiale, traverse le bord axial (16) du premier bourrelet (2) dans la direction radiale et/ou le deuxième bourrelet (6) présente au moins une deuxième rainure axiale (18, 18', 18'', 18'''), de préférence plusieurs deuxièmes rainures axiales, en particulier quatre deuxièmes rainures axiales, qui, pour éviter une ligne d'étanchéité axiale, traverse le bord axial (20) du deuxième bourrelet (6) dans la direction radiale.

2. Élément d'étanchéité élastique selon la revendication 1,
**caractérisé en ce que**
la première ligne d'étanchéité (10) est réalisée sous forme de ligne d'étanchéité radiale et/ou la deuxième ligne d'étanchéité (12) est réalisée sous forme de ligne d'étanchéité radiale.

3. Élément d'étanchéité élastique selon la revendication 2,
**caractérisé en ce que**
le premier bourrelet (2) est réalisé sous forme de joint d'étanchéité radial pour l'étanchéité exclusivement radiale, la première ligne d'étanchéité (10) étant la seule ligne d'étanchéité du premier bourrelet (2), et/ou le deuxième bourrelet (6) est réalisé sous forme de joint d'étanchéité radial pour l'étanchéité exclusivement radiale, la deuxième ligne d'étanchéité (12) étant la seule ligne d'étanchéité du deuxième bourrelet (6).

4. Élément d'étanchéité élastique selon l'une quelconque des revendications précédentes,
**caractérisé en ce que**
la périphérie de l'enveloppe de tuyau souple (22) au moins dans une portion centrale (11), en cas d'équilibre de pression entre le passage de fluide (38) et l'environnement, est inférieure à la périphérie du premier bourrelet (2) et/ou est inférieure à la périphérie du deuxième bourrelet (6) .

5. Élément d'étanchéité élastique selon l'une quelconque des revendications précédentes,
**caractérisé en ce que**
la périphérie de l'enveloppe de tuyau souple (22), au moins dans une portion centrale (11), est réalisée de manière à pouvoir être agrandie par une surpression dans le passage de fluide (38) par rapport à l'environnement, afin d'appliquer l'élément d'étanchéité élastique (1) de manière flexible contre le premier composant (26) et contre le deuxième composant (28).

6. Dispositif de guidage de fluide comprenant un premier composant (26), un deuxième composant (28) et un élément d'étanchéité élastique (1) qui étanchéifie un passage de fluide (38) guidé à travers l'élément d'étanchéité élastique (1) entre le premier composant (26) et le deuxième composant (28), l'élément d'étanchéité élastique (1) présentant une première ligne d'étanchéité (10) avec laquelle le premier composant (26) est amené en contact hermétique tout autour du passage de fluide (38), présentant un premier bourrelet (2) qui constitue la première ligne d'étanchéité (10) et présentant une deuxième ligne d'étanchéité (12) avec laquelle le deuxième composant (28) est amené en contact hermétique tout autour du passage de fluide (38),
**caractérisé par**
une réalisation de l'élément d'étanchéité (1) selon l'une quelconque des revendications 1 à 5.

7. Dispositif de guidage de fluide selon la revendication 6,
**caractérisé en ce que**
le premier composant (26) est un boîtier et le deuxième composant (28) est une cellule de mesure, en particulier un capteur de pression.

8. Dispositif de guidage de fluide selon la revendication 6 ou 7,
**caractérisé en ce que**
le premier composant (26), au moins dans la région avec laquelle l'élément d'étanchéité élastique (1) vient en contact, présente du plastique ou de l'aluminium, en particulier se compose complètement ou au moins essentiellement de plastique ou d'aluminium et/ou le deuxième composant (28) présente, au moins dans la région avec laquelle l'élément d'étanchéité élastique (1) vient en contact, de la céramique, en particulier se compose complètement ou au moins essentiellement de céramique.

9. Dispositif de guidage de fluide selon l'une quelconque des revendications 6 à 8,
**caractérisé en ce que**
le deuxième composant (28) est disposé avec un décalage transversal (Q) par rapport au premier composant (26) par rapport à des surfaces de contact du premier composant (26) et du deuxième composant (28) par rapport à l'élément d'étanchéité élastique (1).

10. Dispositif de guidage de fluide selon l'une quelconque des revendications précédentes 6 à 9, **caractérisé en ce que**
le deuxième composant (28) est fixé par rapport au premier composant (26).

11. Installation d'air comprimé pour un véhicule automobile comprenant un élément d'étanchéité élastique (1) selon l'une quelconque des revendications 1 à 5, ou un dispositif de guidage de fluide (24) selon l'une quelconque des revendications 6 à 10.

12. Véhicule automobile, en particulier véhicule utilitaire, comprenant un élément d'étanchéité élastique (1) selon l'une quelconque des revendications 1 à 5, ou comprenant un dispositif de guidage de fluide (24) selon l'une quelconque des revendications 6 à 10, ou comprenant une installation d'air comprimé selon la revendication 11.

13. Utilisation d'un élément d'étanchéité (1) élastique pour l'étanchéité d'un passage de fluide (38) entre un premier composant (26) et un deuxième composant (28),
**caractérisée en ce que**
l'élément d'étanchéité élastique utilisé (1) est réalisé selon l'une quelconque des revendications 1 à 5, ou l'élément d'étanchéité élastique (1) est utilisé dans une réalisation selon l'une quelconque des revendications 1 à 5 pour l'étanchéité dans un dispositif (24) de guidage de fluide selon l'une quelconque des revendications 6 à 10 et/ou dans une installation d'air comprimé selon la revendication 11 et/ou dans un véhicule automobile selon la revendication 12.

14. Utilisation d'un élément d'étanchéité élastique selon la revendication 13,
**caractérisée en ce que**
l'élément d'étanchéité élastique (1) et le deuxième composant (28) sont disposés sur le premier composant (26) de telle sorte que le passage de fluide (38) est ensuite guidé entre le premier composant (26) et le deuxième composant (28) à travers l'élément d'étanchéité élastique (1), l'élément d'étanchéité élastique (1) venant en contact de manière hermétique avec le deuxième composant (28) de manière décalée transversalement par rapport au premier composant (26) de telle sorte que la première ligne d'étanchéité (10) de l'élément d'étanchéité élastique (1) constituée par le premier bourrelet (2) de l'élément d'étanchéité élastique (1) soit amenée en contact hermétique tout autour du passage de fluide (38) avec le premier composant (26) et que la deuxième ligne d'étanchéité (12) de l'élément d'étanchéité élastique (1) constituée par le deuxième bourrelet (6) de l'élément d'étanchéité élastique (1) soit amenée en contact hermétique tout autour du passage de fluide (38) avec le deuxième composant (28), l'élément d'étanchéité élastique (1) étant disposé avec un décalage transversal (Q) du deuxième bourrelet (6) par rapport au premier bourrelet (2), et ce décalage transversal (Q) étant permis au moyen de l'enveloppe de tuyau souple (22) de l'élément d'étanchéité élastique (1) réalisé sous forme de tube souple, qui s'étend depuis le premier bourrelet (2) disposé à la première extrémité (7) de l'élément d'étanchéité élastique (1) jusqu'au deuxième bourrelet (6) disposé à la deuxième extrémité (8) de l'élément d'étanchéité élastique (1).
